Europäisches Patentamt

European Patent Office

Office européen des brevets

(11) Publication number: **0 402 818**

**A1**

(12) **EUROPEAN PATENT APPLICATION**

(21) Application number: 90110975.1

(22) Date of filing: 11.06.90

(51) Int. Cl.5: **G01L 9/12**

(30) Priority: **12.06.89 JP 68251/89 U**

(43) Date of publication of application:
**19.12.90 Bulletin 90/51**

(84) Designated Contracting States:
**AT BE CH DE DK ES FR GB GR IT LI NL SE**

(71) Applicant: **OMRON CORPORATION**
**10, Tsuchido-cho Hanazono Ukyo-ku**
**Kyoto 616(JP)**

(72) Inventor: **Takada, Mikio**
**Nomura Co-Op no. 617, 25 Minami Hiromati,**
**Umezu**
**Ukyou-Ku, Kyoto(JP)**
Inventor: **Takahashi, Toshiji**
**Gurase Arashiyama no. 703, 3-8**
**Nakaoshitamati**
**Arashiyama, Nishikyou-Ku, Kyoto(JP)**

(74) Representative: **Kahler, Kurt**
**Patentanwalt Dipl.-Ing. Kurt Kahler**
**Gerberstrasse 3 Postfach 1249**
**D-8948 Mindelheim(DE)**

(54) **Pressure sensor.**

(57) A pressure sensor according to this invention comprises a sensor body (1) with its bottom part having a downwardly projecting pressure inducing duct (11) and an upper opening, a diaphragm (2), a moveable electrode (3) fixed on the diaphragm (2), a fixed electrode (4) parallel to and above the moveable electrode (3), wherein the fixed electrode (4) closes the upper opening of the sensor body (1), and an oscillation circuit board (5) with electronic parts (51) deployed at a given distance over the fixed electrode (4).

FIG. I

EP 0 402 818 A1

# PRESSURE SENSOR

## BACKGROUND:

### Field of the Invention:

This invention relates to an electrostatic type pressure sensor.

### Related Art:

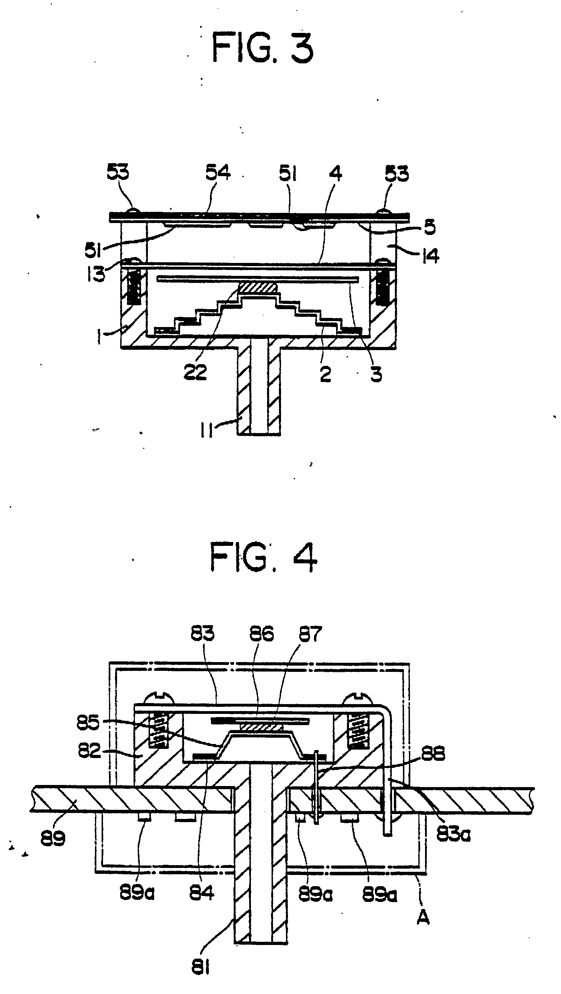

Fig. 4 is a cross-sectional view showing a conventional electrostatic type pressure sensor. This pressure sensor has a pressure inducing duct 81 equipped on the bottom side thereof. A hollow cylindrical-shaped sensor body 82 has an opening on the upper side thereof which is closed by a fixed electrode 83. A diaphragm 85 is located in the open space of the sensor body 82 and is fixed by an adhesive 84 to a lower portion of the sensor body 82. A moveable electrode 86 is fixed on the upper surface of the diaphragm 85 by solder 87. Furthermore, the fixed electrode 83 and the moveable electrode 86 are parallel to each other and are usually not in contact, i.e. there is a space between them.

The fixed electrode 83 has a terminal 83a downwardly projecting outside of the sensor body 82. Also projecting out of the sensor body 82 is one end of a lead 88. The other end of the lead 88 is soldered to an end of the diaphragm 85. The lead 88 and the terminal 83a serve to introduce electrostatic capacity to the apparatus.

An oscillation circuit board 89 is provided underneath the sensor body 82. Various electronic parts 89a such as, ICs, resistors, and the like are mounted on the bottom side of the oscillation circuit board 89. The terminal 83a and the lead 88 are fixed to the oscillation circuit board 89 by insertion soldering. Furthermore, the oscillation circuit board 89 and the sensor body 82 are surrounded by a shield case A to prevent influence from dielectric forces.

To measure pressure, fluid pressure is introduced through the pressure inducing duct 81 into an open space of the sensor body 82. In response to the introduction of pressure, the diaphragm 85 is upwardly displaced. Since the moveable electrode 86 is fixed to the diaphragm 85 and is also upwardly displaced, the distance between the electrode diminishes. In other words, the electrostatic capacity between the electrodes is changed. Due to this change in electrostatic capacity, CR oscillation is initiated. Consequently, pressure is detected in the form of an oscillation frequency.

However, the conventional pressure sensor has some drawbacks. For one, the electronic parts 89a mounted on the oscillation circuit board 89 and the pressure sensor have to be separately controlled. Additionally, the oscillation circuit board's surface area, which is larger than the diameter of the sensor body 82, and the shield case A result in a pressure sensor that is unduly large.

## SUMMARY:

To solve the above-mentioned problems, it is an object of this invention to provide a pressure sensor wherein the electronic parts and the pressure sensor are controlled as a whole.

Another object of this invention is to provide a miniaturized pressure sensor.

These objects are realized by providing a pressure sensor comprising a sensor body having a pressure introduction duct on the bottom and an opening on the top, a diaphragm provided in an open space of the sensor body, a moveable electrode fixed on the diaphragm, a fixed electrode deployed above and parallel to the moveable electrode and closing the open space on top of the sensor body, and an oscillation circuit board with electronic parts on its surface which is mounted on the sensor body a certain distance above the fixed electrode. The electronic parts on the oscillation circuit board and the pressure sensor are integrally formed so they can be controlled at the same time. Furthermore, the oscillation circuit board is located at a fixed distance above the pressure sensor body, protecting the pressure sensor form outer dielectric forces and eliminating space occupied by the shield case A in the prior art, allowing the miniaturization of the pressure sensor.

Other objects and advantages of this invention will become apparent from the following description and accompanying drawings.

## BRIEF DESCRIPTION OF THE DRAWINGS:

Fig.1 is a cross-sectional view illustrating an embodiment of pressure sensor according to this invention.

Fig. 2 is a perspective view illustrating the embodiment of a pressure sensor according to Fig. 1.

Fig. 3 is a cross-sectional view illustrating another embodiment of a pressure sensor according to this invention.

Fig. 4 is a cross-sectional view of a conventional pressure sensor.

DESCRIPTION OF THE PREFERRED EMBODIMENT:

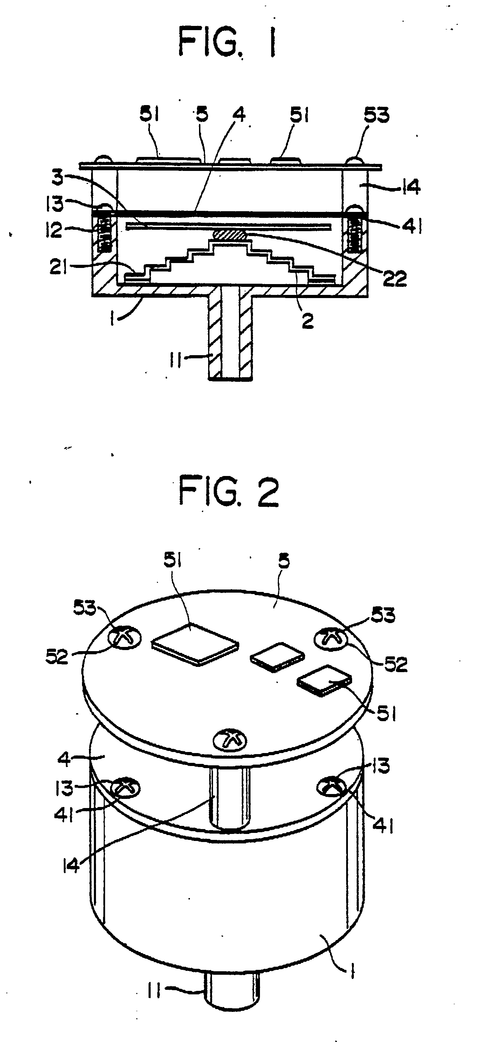

Fig. 1 shows an embodiment of a pressure sensor according to this invention comprising a pressure inducing duct 11 on the bottom of a sensor body 1, a diaphragm 2 on which a moveable electrode 3 is fixed, a fixed electrode 4 attached to the sensor body 1 above the moveable electrode 3, and an oscillation circuit board 5 equipped with electronic parts 51 that is deployed a fixed distance above the sensor body 1.

The sensor body 1 is cylindrically formed, as shown in Fig. 2. The diaphragm 2 is made out of metal and opens downwardly and has a flange part 21 integrally formed with the sensor body 1. Specifically, the flat flange portion 21 is fixed to the sensor body 1 with an adhesive. The moveable electrode 3 is horizontally fixed to the upper surface of the diaphragm 2 by solder 22.

To close the opening in the sensor body 1, the fixed electrode 4 is deployed over the opening and fixed to the sensor body 1 by penetrating screws which project through holes 41 in the fixed electrode 4 into screw holes 12 of the sensor body 1. Furthermore, the holes 42 are provided around the circumference of the fixed electrode 4, which is not only above but also parallel to the moveable electrode 3.

The disc-shaped oscillation board 5 has roughly the same diameter of the sensor body 1 and has electronic parts 51 such as ICs, resistors, and the like on its upper surface. A plurality of projecting holes 52 around the circumference of the oscillation circuit board 5 correspond to projecting shafts 14 projecting from the top of the sensor body 1. Moreover, screws 53 are inserted through the holes 52 and into the shafts 14 to secure the oscillation circuit board 5 above the sensor body 1. Accordingly, the fixed electrode 4 and the oscillation circuit board 5 are parallel to each other with a distance of projecting shaft 14 between them. Furthermore, the diaphragm 2, moveable electrode 3, and the fixed electrode 4 are electronically connected to the oscillation circuit board 5 by leads (not shown).

Fig. 3 depicts an electrostatic pressure sensor wherein the oscillation circuit board 5 has another embodiment. In the first embodiment, the electronic parts 51 are mounted on the upper surface of the oscillation circuit board 5. However, in this alternative embodiment, the electronic parts 51 are now oriented toward the fixed electrode 4. Furthermore, the top, or backside of the oscillation circuit board 5 has a metallic film 54 formed thereto and grounded in order to protect the oscillation circuit board 5 from outer dielectric forces. Consequently, the large shield case A of the conventional art is not needed.

The above descriptions and accompanying drawings are merely illustrative of the applications of the principles of the present invention and are not limiting. Many other embodiments falling under the spirit and scope of this invention may be devised by those skilled in the art.

**Claims**

1. A pressure sensor, comprising:
a sensor body (1) having an upper opening and with its bottom part having a downwardly projecting pressure inducing part (11);
a diaphragm (2);
a moveable electrode (3) fixed on said diaphragm (2);
a fixed electrode (4) located above and parallel to said moveable electrode (3), wherein said fixed electrode (4) covers the upper opening of the sensor body (1); and
an oscillation circuit board (5) arranged at a predetermined distance above said fixed electrode (4), wherein said oscillation circuit board (5) has electronic parts (51) equipped thereto.

2. The pressure sensor of claim 1, wherein the electronic parts (51) are placed on the upper surface of said oscillation circuit board (5).

3. The pressure sensor of claim 1, wherein the electronic parts are placed on that side of said oscillation circuit board (5) oriented towards the fixed electrode (4).

4. The pressure sensor of claim 3, wherein a metallic film (54) is formed on the upper surface of the oscillation circuit board (5).

5. The pressure sensor of any preceding claim, wherein said oscillation circuit board (5) is kept at said predetermined distance above said fixed electrode (4) by spacers (14) having screws (53) passed therethrough threaded to the upper side of said sensor body (1).

# FIG. 1

# FIG. 2

EP 0 402 818 A1

# FIG. 3

# FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int Cl⁵) |
|---|---|---|---|
| Y | PATENT ABSTRACTS OF JAPAN, unexamined applications, P field, vol. 9, no. 26, February 5, 1985 THE PATENT OFFICE JAPANESE GOVERNMENT page 86 P 332 * Kokai-no. 59-171 826 (KOPARU) * | 1 | G 01 L 9/12 |
| Y | US - A - 4 128 006 (GRABOW) * Fig. 2; column 3, line 51 - column 4, line 9 * | 1 | |
| X | | 2,5 | |
| A | GB - A - 2 189 607 (SIGNAL TECHNOLOGY) * Fig. 6 * | 1,2 | |
| A | EP - A1 - 0 020 194 (BENDIX) * Fig. 2 * | 1,2,5 | **TECHNICAL FIELDS SEARCHED (Int Cl⁵)** G 01 L 9/00 |

The present search report has been drawn up for all claims

| Place of search | Date of completion of the search | Examiner |
|---|---|---|
| VIENNA | 28-08-1990 | BURGHARDT |